# EUROPÄISCHE PATENTSCHRIFT

(11) **EP 4 033 320 B1**
(45) Veröffentlichungstag und Bekanntmachung des Hinweises auf die Patenterteilung: **11.09.2024**
(21) Anmeldenummer: 21218001.2
(22) Anmeldetag: 28.12.2021
(51) Int. Cl.: B24B 49/00, B24B 49/10, B24B 49/12, B24B 49/14, B24B 49/16, G05B 23/02, B24B 31/00, B24B 51/00

(54) **VERFAHREN ZUR ÜBERWACHUNG EINES GLEITSCHLEIFPROZESSES**
METHOD FOR MONITORING A VIBRATORY FINISHING PROCESS
PROCÉDÉ DE SURVEILLANCE D'UN PROCESSUS DE POLISSAGE

(30) Priorität: 21.01.2021 DE 102021101245
(43) Veröffentlichungstag der Anmeldung: 27.07.2022
(73) Patentinhaber: Rösler Holding GmbH, 96231 Bad Staffelstein (DE)
(72) Erfinder: LISKE, Marco, 96450 Coburg (DE); THEN, Alexander, 96188 Stettfeld (DE); TÄUBERT, Franziska, 96215 Lichtenfels (DE); THOMANN, Stefan, 96184 Rentweinsdorf (DE); BÖHM, Rüdiger, 96190 Untermerzbach (DE); HÖHN, Christian, 96489 Niederfüllbach (DE); HENKEL, Marcus, 96269 Großheirath (DE); SCHULZ, Conrad, 96103 Hallstadt (DE)
(74) Vertreter: Manitz Finsterwald Patent- und Rechtsanwaltspartnerschaft mbB

(56) Entgegenhaltungen:
- DE-A1- 102011 113 167
- JP-A- 2020 121 388
- US-A- 5 795 212

## Beschreibung

Die vorliegende Erfindung betrifft ein Verfahren zur Überwachung eines Gleitschleifprozesses in einer Gleitschleifanlage und einer ggf. damit verbundenen Prozesswasserbehandlungsanlage.

Das Gleitschleifen hat sich seit vielen Jahrzehnten bewährt, um Bauteile aus verschiedensten Materialien zu bearbeiten, d.h. zu entgraten, zu verrunden, zu polieren, etc. Im Rahmen der vorliegenden Anmeldung wird unter Gleitschleifen jede Art eines Gleitschleifprozesses verstanden, beispielsweise Tauchschleifen, Schleppschleifen, Behandeln mit Hilfe von Vibrationsgleitschleifmaschinen oder Fliehkraft-Gleitschleifmaschinen, oder dergleichen.

Beim Gleitschleifen werden die Werkstücke in einen Behälter gegeben, der mit Gleitschleifkörpern (Verfahrensmittel) gefüllt ist und mit Prozesswasser durchströmt wird, wobei das Prozesswasser eine Mischung aus Wasser und Zusatzstoffen (Compounds in flüssiger, fester oder pastöser Form) ist. Im Betrieb werden die Schleifkörper und/oder die Werkstücke innerhalb des Behälters in Bewegung versetzt, so dass eine Relativbewegung zwischen den Schleifkörpern und den Bauteilen entsteht und der gewünschte Bearbeitungsvorgang initiiert wird. Eine Gleitschleifvorrichtung enthält deshalb zumindest eine Einrichtung für eine Vibration und ggf. einen Antrieb von Spindeln oder Werkstückträgern sowie diverse elektrische Einrichtungen, wie Sensoren, Heizelemente und dergleichen.

Das in einer Gleitschleifanlage verwendete Prozesswasser, das üblicherweise Wasser und Compound in einer Konzentration von etwa 1 bis 2% umfasst, dient dazu, an den Werkstücken Materialabtrag zu generieren und Rückstände abzulösen, Schmutzstoffe abzuwaschen und aus der Gleitschleifvorrichtung auszuspülen. Im Laufe des Verfahrens werden die eingesetzten Verfahrensmittel verbraucht und das Prozesswasser wird zunehmend verschmutzt. Es kann deshalb einer Prozesswasserreinigungsanlage zugeführt werden, in der das Prozesswasser gereinigt, wiederaufbereitet und anschließend in die Gleitschleifvorrichtung zurückgeführt wird. Gleichzeitig können aus einer solchen Prozesswasserreinigungsanlage Feststoffpartikel und andere mitausgetragene Verunreinigungen durch eine chemische, mechanische und/oder physikalische Behandlung und auch durch Zentrifugieren entfernt und ausgesondert werden.

Während des gesamten Prozesses können Störungen auftreten, die eine ordnungsgemäße Bearbeitung der Werkstücke beeinträchtigen und die auch zu einem Ausfall aller beteiligten Vorrichtungen führen können. Hierbei ist die Ursache einer solchen Störung nicht immer ohne weiteres erkennbar oder es wird eine Ursache für eine Störung angenommen, die jedoch nicht primär für die Störung verantwortlich ist.

Aus der DE 10 2011 113 167 A1 ist ein Verfahren nach dem Oberbegriff des Anspruchs 1 bekannt. Die US 5,795,212 A beschreibt eine Materialbearbeitung mit magnetorheologischen Fluiden. Die JP 2020121388 A offenbart ein Schleifverfahren, bei dem Werkstücke in einer Trommel in einer Flüssigkeit geschliffen werden.

Es ist deshalb die Aufgabe der vorliegenden Erfindung, ein Verfahren und eine Vorrichtung zur Überwachung eines Gleitschleifprozesses in einer Gleitschleifanlage zu schaffen, mit denen Störungen im Betriebsablauf zuverlässig erkannt werden können.

Die Lösung dieser Aufgabe erfolgt durch die Merkmale der unabhängigen Ansprüche und insbesondere durch ein Verfahren nach Anspruch 1, bei dem aus zumindest drei Parametergruppen des Gleitschleifprozesses jeweils zumindest zwei bestimmte Parameter erfasst und einer Auswerteeinrichtung zugeführt werden. Die Auswerteeinrichtung analysiert die Werte aller erfassten Parameter und gibt anschließend einen Befehl für einen Betrieb der Gleitschleifanlage mittels einer Ausgabeeinrichtung aus. Von den drei Parametergruppen umfasst eine erste Parametergruppe zumindest zwei Maschinenparameter, eine zweite Parametergruppe umfasst zumindest zwei Prozesswasserparameter und eine dritte Parametergruppe umfasst zumindest zwei Prozessparameter. Maschinenparameter sind zumindest Drehzahl und Temperatur, können aber auch Schwingungsamplitude, Energieverbrauch, oder Motorstrom einer in der Gleitschleifanlage betriebene Maschine umfassen. Prozesswasserparameter sind zumindest Leitfähigkeit und Trübungsgrad, können aber auch Temperatur, pH-Wert, Brechungsindex, Wasserhärte, Compoundkonzentration, Schaumbildung, Geruch oder Dosiermenge von Prozesschemikalien sein. Prozessparameter sind zumindest Verfahrensmittelverbrauch und Produktionsmenge der bearbeiteten Werkstücke, können aber auch Füllstand, Durchlaufzeit, Prozesszeit, Abriebmengen, Verfahrensmittelverschleiß, oder Durchflussmenge von verwendeten Flüssigkeiten umfassen. Erfindungsgemäß wurde erkannt, dass eine zuverlässige Prozessüberwachung und eine sinnvolle Fehlererkennung dadurch erreicht werden können, dass nicht nur einzelne Parameter wie beispielsweise Füllstand oder pH-Wert, sondern zumindest jeweils zwei

Parameter aus den vorstehend definierten Parametergruppen erfasst und analysiert werden. Nur durch eine solche gesamtheitliche Betrachtung des Gleitschleifprozesses kann verhindert werden, dass einer vorhandenen Störung eine falsche Ursache zugeordnet wird. So kann beispielsweise eine Störung bei der Prozesswasseraufbereitung Auswirkungen auf die Bearbeitung der Werkstücke haben. Umgekehrt kann sich jedoch auch eine Störung im Gleitschleifprozess auf die Prozesswasseraufbereitung auswirken.

Vorteilhafte Ausführungsformen der Erfindung sind in der Beschreibung, der Zeichnung, sowie den Unteransprüchen beschrieben.

Bei einer ersten vorteilhaften Ausführungsform kann als Befehl für den Betrieb der Gleitschleifanlage zumindest eine Handlungsweisung für einen Bediener ausgegeben werden. So kann die Auswerteeinrichtung nach Erfassung und Ermittlung einer Abweichung (Analyse) der Parameter für einen Bediener eine oder mehrere Handlungsanweisungen ausgeben, die bei Befolgung einen störungsfreien Prozess bewirken. Alternativ oder zusätzlich kann die Auswerteeinrichtung als Befehl zumindest einen Steuerbefehl ausgeben, mit dem eine oder mehrere Vorrichtungen in der Gleitschleifanlage angesteuert werden. So kann beispielsweise als Befehl die Handlungsanweisung ausgegeben werden, eine Zentrifuge in der Prozesswasserreinigungsanlage zu überprüfen und gleichzeitig kann der Füllstand in der Gleitschleifvorrichtung durch einen Steuerbefehl erhöht werden.

Die Erfassung der Parameter kann nach einer weiteren Ausführungsform durch manuelles Eingeben in eine Eingabeeinrichtung der Erfassungseinrichtung erfolgen. Hierbei kann ein Bediener einzelne Parameterwerte aus der Anlage auslesen oder aber durch Messungen bestimmen und in die Eingabeeinrichtung eingeben.

Alternativ oder zusätzlich kann nach einer weiteren Ausführungsform die Erfassung der Parameter automatisiert und insbesondere kontinuierlich erfolgen. So können diverse Parameter wie beispielsweise Temperatur des Prozesswassers, Temperatur von elektrischen Aggregaten, Energieverbrauch etc. automatisiert an die Auswerteeinrichtung übertragen werden. Sofern dies kontinuierlich, d.h. wiederholt und dauerhaft erfolgt, lässt sich eine Abweichung im Betriebsablauf aufgrund vorhergehender Vorgaben und Messdaten im störungsfreien Betrieb besonders gut erkennen. Weiterhin lassen sich auch Abweichungen der erfassten Parameter dazu verwenden, einen Befehl auszugeben, dass bestimmte Komponenten der Gleitschleifanlage gewartet oder ausgetauscht werden müssen. Auf diese Weise kann sehr frühzeitig dafür gesorgt werden, dass Ursachen für Störungen erkannt und beseitigt werden, die sich ansonsten unter Umständen erst später in einem nicht mehr tolerierbaren Maße auf den Gleitschleifprozess auswirken würden.

Nach einer weiteren Ausführungsform kann der Befehl die Ausgabe einer Alarmmeldung umfassen, wodurch weitergehende Schäden an Werkstücken im Prozess und für Komponenten der Gleitschleifanlage verhindert werden können.

Nach einer weiteren vorteilhaften Ausführungsform kann eine Übertragung der Parameter an die Auswerteeinrichtung durch Datenfernübertragung erfolgen. Hierdurch können die Parameter drahtlos oder kabelgebunden an eine Auswerteeinrichtung übertragen werden, die beispielsweise vom Maschinenhersteller betrieben und gewartet wird.

Nach einer weiteren vorteilhaften Ausführungsform kann in der zweiten Parametergruppe ein Parameter, beispielsweise ein Prozesswasserparameter, dadurch erfasst werden, dass ein Bediener eine visuelle und/oder olfaktorische Beurteilung vornimmt, wobei das Ergebnis dieser Beurteilung in Form einer aus einer Gruppe vorauswählbaren Bewertung der Auswerteeinrichtung zugeführt wird. So kann dem Bediener beispielsweise eine Gruppe von Bewertungen zur Verfügung gestellt werden, die eine Charakterisierung des Prozesswassers beschreibt. Eine solche Gruppe kann beispielsweise die Bewertungen transparent, transluzent, milchig, verschmutzt, trüb, verfärbt oder dergleichen umfassen, wobei der Bediener dann eine oder mehrere dieser vorauswählbaren Bewertungen auswählt und als Prozesswasserparameter der Auswerteeinrichtung zuführt. Auf gleiche Weise kann ein Geruch des Prozesswassers dadurch charakterisiert werden, dass eine oder mehrere Bewertungen aus einer Gruppe ausgewählt werden, die beispielsweise die Parameter geruchlos, ölig, stechend, würzig oder dergleichen umfasst.

Alternativ oder zusätzlich kann nach einer weiteren Ausführungsform kann ein Parameter durch einen Bildsensor und/oder einen Geruchssensor erfasst werden. So kann beispielsweise der Inhalt eines Bearbeitungsbehälters und/oder das im Prozess befindliche Prozesswasser mittels einer Kamera erfasst werden, um eine Schaumbildung zu erkennen oder auszuschließen, oder das Prozesswasser kann mit Hilfe eines Geruchssensors analysiert werden.

Nach einer weiteren vorteilhaften Ausführungsform kann in der ersten Parametergruppe zumindest ein Maschinenparameter einer Gleitschleifvorrichtung, einer Zentrifuge, einer Pumpe und/oder einer Abwasserreinigungsvorrichtung erfasst werden. So kann beispielsweise die Drehzahl, das Geräusch oder die Temperatur von elektrischen oder hydraulischen Aggregaten, der Energieverbrauch oder der Motorstrom von elektrischen Aggregaten oder der Energieverbrauch von Heizeinrichtungen erfasst werden, wobei die elektrischen Aggregate sowohl in der Gleitschleifvorrichtung selbst wie auch in der Prozesswasseraufbereitung, Prozesswasserreinigung oder Abwasseraufbereitung enthalten sein können. Für eine Geräuschermittlung können Klopfsensoren, Mikrofone oder dgl. verwendet werden. Auch können Signale von Wägevorrichtungen, Sensoren, Schwimmern, Stellgliedern, Förderbändern, Beschickungsvorrichtungen, Ventilen oder Trocknern erfasst werden. Auch kann überwacht werden, ob Werkstücke in einer Werkstückhalterung ordnungsgemäß gehalten sind.

Als Prozessparameter können auch erfasst bzw. gemessen werden: Die Schlammmenge des Schleifkörperabriebs, die Werkstücktemperatur, beispielsweise über eine Wärmebildkamera, die Luftfeuchtigkeit und/oder Temperatur von Trocknungsluft, der Glanzgrad und/oder die Rauheit der Werkstücke, die Kontur bzw. Verrundung der Werkstücke, die Härte oder Verformung der Werkstücke, die Sauberkeit der Werkstücke, das Schliffbild der Werkstücke, der Zustand von Schleifkörpern. Auch kann der Werkstückdurchsatz überwacht werden, um beispielsweise zu ermitteln, ob alle zugeführten Teile auch wieder aus der Gleitschleifvorrichtung entfernt worden sind.

Nach einer weiteren vorteilhaften Ausführungsform können zur Ausgabe des Befehls die erfassten Parameter aller drei Parametergruppen in der Auswerteeinrichtung korreliert werden. Dies bedeutet, dass keine separate Analyse der Parameter der einzelnen Parametergruppen erfolgt, sondern die Parameter aller drei Gruppen werden miteinander in Beziehung gesetzt. Da oft mehrere Parameter neu justiert werden müssen, um zu einem Regelbetrieb zurückzufinden, wird erfindungsgemäß bei dieser Ausführungsform eine systematische Problemanalyse nach einem Interaktionsschema durchgeführt. Durch eine solche Korrelation wird sichergestellt, dass nicht nur chemische Einflüsse, sondern auch mechanische und elektrische Einflüsse als mögliche Ursachen untersucht werden. Hierdurch ist es auch möglich, primäre Ursachen von sekundären Ursachen zu unterscheiden.

Nach einem weiteren Aspekt betrifft die vorliegende Erfindung auch eine Vorrichtung zur Durchführung eines Verfahrens der vorstehend beschriebenen Art mit einer Auswerteeinrichtung, die mit einer Eingabeeinrichtung und einer Ausgabeeinrichtung in Verbindung steht, wobei die Auswerteeinrichtung ausgebildet und eingerichtet ist, zumindest zwei Maschinenparameter, zumindest zwei Prozesswasserparameter und zumindest zwei Prozessparameter eines Gleitschleifprozesses der Gleitschleifanlage zu erfassen, die erfassten Parameter durch hinterlegte Zusammenhänge, Abhängigkeiten und Grenzwerte korreliert zu analysieren und mittels der Ausgabeeinrichtung einen Befehl für einen Betrieb der Gleitschleifanlage auszugeben.

Nach einer vorteilhaften Ausführungsform kann die Eingabeeinrichtung zur Erhöhung des Automatisierungsgrades mit einer Steuereinheit, beispielsweise einer SPS-Steuerung, der Gleitschleifanlage verbunden sein und zumindest einen der Parameter aus der Steuereinheit auslesen. Durch entsprechende Schnittstellen kann hierdurch auf einfache Weise dafür gesorgt werden, dass eine Vielzahl von in der Steuereinheit ohnehin erfassten Parametern an die Auswerteeinrichtung übertragen wird.

Nach einer weiteren vorteilhaften Ausführungsform kann die Ausgabeeinrichtung mit einer Steuereinheit der Gleitschleifanlage verbunden sein und zumindest einen Steuerbefehl für einen Betrieb der Gleitschleifanlage an die Steuereinheit ausgeben.

Nachfolgend wird die vorliegende Erfindung rein beispielhaft anhand einer vorteilhaften Ausführungsform und unter Bezugnahme auf die beigefügte Zeichnung beschrieben. Es zeigen:
- Fig. 1: eine stark schematisierte Gleitschleifanlage mit einer Vorrichtung zur Überwachung des Gleitschleifprozesses; und
- Fig. 2: ein Schemadiagramm einer Überwachungsvorrichtung.

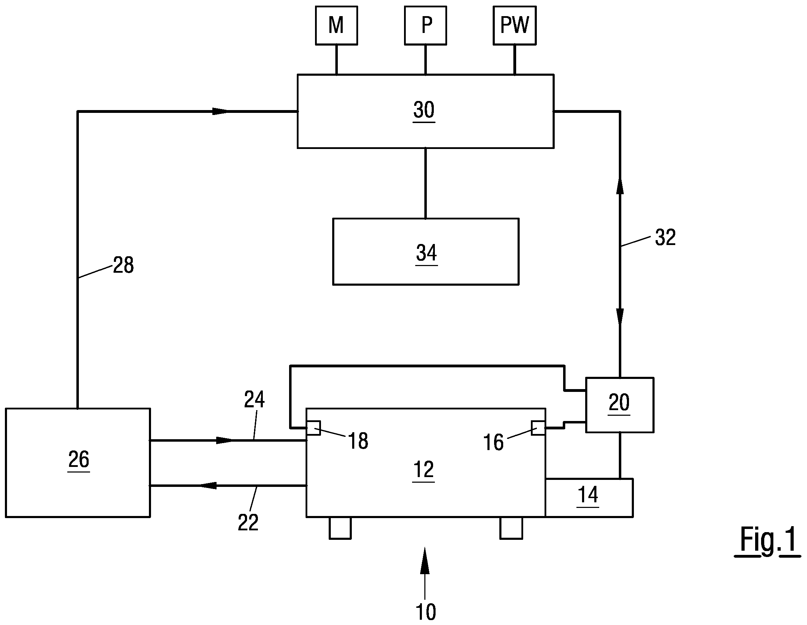

Fig. 1 zeigt eine beispielhafte Gleitschleifanlage mit einer Gleitschleifvorrichtung 10, die einen Behälter 12 umfasst, der mit Hilfe eines Vibrationsmotors 14 in Schwingungen versetzt werden kann. Die Gleitschleifvorrichtung 10 weist ferner diverse Sensoren auf, beispielsweise einen Füllstandssensor 16 und einen Temperatursensor 18.

Für den Betrieb der Gleitschleifvorrichtung ist eine Steuereinheit 20 vorgesehen, beispielsweise eine SPS-Steuerung, die mit sämtlichen elektrischen Komponenten der Gleitschleifvorrichtung 10 in Verbindung steht. So gibt die Steuereinheit 20 nicht nur Steuersignale aus, um den Vibrationsmotor 14 anzusteuern und den Füllstand oder die Temperatur innerhalb des Behälters 12 zu ermitteln. Vielmehr erfasst die Steuereinheit 20 auch die Temperatur, den Energieverbrauch, den Strom und die Drehzahl des Antriebsmotors 14. Weiterhin steuert die Steuereinheit 20 sämtliche Zulauf- und Ablaufventile und sonstigen Komponenten der Gleitschleifvorrichtung 10 an.

Der Behälter 12 der Gleitschleifvorrichtung 10 steht über eine Ablaufleitung 22 und eine Zulaufleitung 24 mit einer Prozesswasseraufbereitungsanlage 26 in Verbindung, wobei die Prozesswasseraufbereitungsanlage 26 weitere Komponenten wie beispielsweise eine Zentrifuge, einen Frischwassertank, einen Schmutzwassertank, einen Rührer, Füllstandssensoren, Dosiereinrichtungen, Hebestationen, Pumpen, Sensoren und dergleichen enthält. So können in der Prozesswasseraufbereitungsanlage 26, in dem Behälter 12, in der Abwasseraufbereitung oder an anderer Stelle das Aussehen, die Temperatur, der pH-Wert, die Leitfähigkeit, der Brechungsindex, die Wasserhärte, der Geruch, der Trübheitsgrad, der Transmissionsgrad oder auch eine Schaumbildung des Prozesswassers erfasst werden, wobei verschiedene dieser Parameter auch durch Zugabe vom Compoundstoffen, Abwasserbehandlungsprodukten oder Frischwasser variiert werden können. Sämtliche der erfassten Prozesswasserparameter werden über eine Datenverbindung 28 an eine Auswerteeinrichtung 30 übertragen, die über eine weitere Datenverbindung 32 mit der Steuereinheit 20 der Gleitschleifvorrichtung 10 in Verbindung steht. Die Auswerteeinrichtung 30 steht weiterhin mit Eingabeeinrichtungen M, P und PW in Verbindung, mit denen weitere Parameter der drei Parametergruppen eingegeben bzw. erfasst werden können sowie mit einer Ausgabeeinrichtung 34, mit der die Ausgabe von Befehlen für den Betrieb der Gleitschleifanlage und der Prozesswasseraufbereitungsanlage möglich ist, beispielsweise in Form einer Handlungsanweisung und/oder als Steuerbefehl.

Im Betrieb erfasst die Auswerteeinrichtung 30 jeweils zumindest zwei Parameter aus der Gruppe der Maschinenparameter, der Prozesswasserparameter und der Prozessparameter und analysiert die erfassten Parameter korreliert. Durch die verknüpfte Untersuchung und Auswertung der Parameter sowohl der elektrischen Komponenten wie auch des Prozesswasserkreislaufs und des Gleitschleifprozesses an sich können Befehle für den weiteren Betrieb der Gleitschleifanlage ausgegeben werden, die es dem Betreiber ermöglichen, in einen Regelbetrieb zurückzukehren.

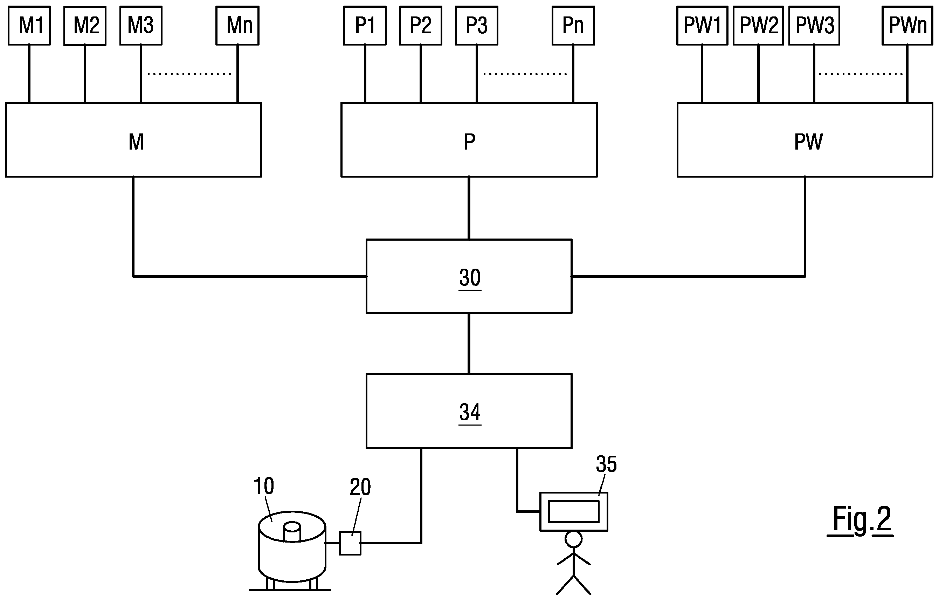

Fig. 2 zeigt eine schematische Darstellung einer Vorrichtung zur Überwachung eines Gleitschleifprozesses. Bei dieser Vorrichtung ist wiederum eine Auswerteeinrichtung 30 vorgesehen, die von jeweils einer Eingabeeinrichtung M, P und PW erfasste Parameter empfängt. Hierbei werden in die Eingabeeinrichtung M Maschinenparameter M1, M2, M3, ... Mn eingegeben während in die Eingabeeinrichtung P Prozessparameter P1, P2, P3, ... Pn eingegeben werden. In die Eingabeeinrichtung PW werden Prozesswasserparameter PW1, PW2, PW3, ... PWn eingegeben.

In der Auswerteeinrichtung 30 wird dann eine korrelierte Auswertung aller Parameter der drei Parametergruppen ausgeführt und es werden über eine angeschlossene Ausgabeeinrichtung 34 Steuerbefehle an die Steuereinheit 20 der Gleitschleifvorrichtung 10 oder aber Handlungsanweisungen an einen Bediener über eine Anzeige 35 ausgegeben.

Durch die korrelierte Überwachung der Parameter aus den drei beschriebenen Parametergruppen kann auf Prozessanomalien reagiert werden. Beispielsweise kann sich im laufenden Betrieb herausstellen, dass die Maschinenparameter der Eingabeeinrichtung M innerhalb der vorgeschriebenen Grenzen liegen, dass jedoch von der Eingabeeinrichtung P und der Eingabeeinrichtung PW Parameter an die Auswerteeinrichtung 30 weitergeleitet werden, die vorgegebene Grenzwerte über- oder unterschreiten. So kann beispielsweise festgestellt werden, dass nicht nur die Compoundkonzentration zu gering ist, sondern auch die Schleifkörpermenge unterhalb einer vorgegebenen Grenze liegt. Aufgrund dieser Überprüfung kann die Auswerteeinrichtung 30 dann die Handlungsanweisung ausgeben, einerseits Compound im Prozesswasser zuzugeben und andererseits die Schleifkörpermenge zu erhöhen.

Es versteht sich, dass die vorstehend beschriebene Verfahrensweise nur ein Beispiel zur Behebung einer Prozessanomalie ist und dass in der Auswerteeinrichtung 30 eine Vielzahl von Grenzwerten und Korrelationen der Parameter vorgegeben ist, damit bei einer Prozessabweichung in einen Regelbetrieb zurückgekehrt werden kann.

## Patentansprüche

1. Verfahren zur Überwachung eines Gleitschleifprozesses, der in einer Gleitschleifanlage (10) in einem mit Prozesswasser gefüllten Behälter durchgeführt wird, bei welchem Verfahren aus zumindest drei Parametergruppen des Gleitschleifprozesses jeweils Parameter erfasst und einer Auswerteeinrichtung (30) zugeführt werden, die nach einer Analyse der Werte aller erfassten Parameter einen Befehl für einen Betrieb der Gleitschleifanlage (10) mittels einer Ausgabeeinrichtung (34) ausgibt,
**dadurch gekennzeichnet, dass** von den drei Parametergruppen
a) eine erste Parametergruppe zumindest einen Maschinenparameter umfasst, der aus der Gruppe ausgewählt ist, die zumindest umfasst: Drehzahl und Temperatur einer in der Gleitschleifanlage betriebenen Maschine (10); und
b) eine zweite Parametergruppe zumindest einen Prozesswasserparameter umfasst, der aus der Gruppe ausgewählt ist, die zumindest umfasst: Leitfähigkeit und Trübheitsgrad des Prozesswassers; und
c) eine dritte Parametergruppe zumindest einen Prozessparameter umfasst, der aus der Gruppe ausgewählt ist, die zumindest umfasst: Verfahrensmittelverbrauch und Produktionsmenge.

2. Verfahren nach Anspruch 1,
**dadurch gekennzeichnet,**
**dass** als Befehl zumindest eine Handlungsanweisung ausgegeben wird.

3. Verfahren nach Anspruch 1 oder 2,
**dadurch gekennzeichnet,**
**dass** als Befehl zumindest ein Steuerbefehl ausgegeben wird.

4. Verfahren nach einem der vorstehenden Ansprüche,
**dadurch gekennzeichnet,**
**dass** die Erfassung der Parameter durch manuelles Eingeben in eine Eingabeeinrichtung (M, P, PW) erfolgt.

5. Verfahren nach einem der vorstehenden Ansprüche 1 - 4,
**dadurch gekennzeichnet,**
**dass** die Erfassung der Parameter automatisiert und insbesondere kontinuierlich erfolgt.

6. Verfahren nach einem der vorstehenden Ansprüche,
**dadurch gekennzeichnet,**
**dass** die Parameter über Datenfernübertragung an die Auswerteeinrichtung (30) übertragen werden.

7. Verfahren nach einem der vorstehenden Ansprüche,
**dadurch gekennzeichnet,**
**dass** der Befehl die Ausgabe einer Alarmmeldung umfasst.

8. Verfahren nach einem der vorstehenden Ansprüche,
**dadurch gekennzeichnet,**
**dass** aus der zweiten Parametergruppe ein Parameter dadurch erfasst wird, dass ein Bediener eine visuelle und/oder olfaktorische Beurteilung vornimmt, und das Ergebnis dieser Beurteilung in Form einer aus einer Gruppe vorauswählbaren Bewertung der Auswerteeinrichtung (30) zuführt.

9. Verfahren nach einem der vorstehenden Ansprüche,
**dadurch gekennzeichnet,**
**dass** ein Parameter aus der zweiten Parametergruppe durch einen Bildsensor und/oder einen Geruchssensor erfasst wird.

10. Verfahren nach einem der vorstehenden Ansprüche,
**dadurch gekennzeichnet,**
**dass** der Befehl eine Aufforderung an einen Bediener umfasst, eine Wartung zumindest einer Komponente der Gleitschleifanlage zu veranlassen.

11. Verfahren nach einem der vorstehenden Ansprüche,
**dadurch gekennzeichnet,**
**dass** in der ersten Parametergruppe zumindest ein Maschinenparameter einer Gleitschleifvorrichtung, einer Zentrifuge, einer Pumpe und/oder einer Abwasserreinigungsvorrichtung erfasst wird.

12. Verfahren nach einem der vorstehenden Ansprüche,
**dadurch gekennzeichnet,**
**dass** zur Ausgabe des Befehls die erfassten Parameter aller drei Parametergruppen in der Auswerteeinrichtung (30) korreliert werden.

13. Vorrichtung zur Durchführung eines Verfahrens nach zumindest einem der vorstehenden Ansprüche, umfassend eine Auswerteeinrichtung (30), die mit einer Eingabeeinrichtung (M, P, PW) und einer Ausgabeeinrichtung (34) in Verbindung steht, und die ausgebildet und eingerichtet ist, zumindest zwei Maschinenparameter, zumindest zwei Prozesswasserparameter und zumindest zwei Prozessparameter eines Gleitschleifprozesses einer Gleitschleifanlage zu erfassen, die erfassten Parameter korreliert zu analysieren und mittels der Ausgabeeinrichtung (34) einen Befehl für einen Betrieb der Gleitschleifanlage auszugeben.

14. Vorrichtung nach Anspruch 13,
**dadurch gekennzeichnet,**
**dass** die Eingabeeinrichtung (34) mit einer Steuereinheit (20) der Gleitschleifanlage verbunden ist und zumindest einen der Parameter aus der Steuereinheit ausliest.

15. Vorrichtung nach Anspruch 13 oder 14,
**dadurch gekennzeichnet,**
**dass** die Ausgabeeinrichtung (34) mit einer Steuereinheit (20) der Gleitschleifanlage verbunden ist und zumindest einen Steuerbefehl für einen Betrieb der Gleitschleifanlage an die Steuereinheit (20) ausgibt.

## Claims

1. A method of monitoring a vibratory grinding process which is executed in a vibratory grinding system (10) in a container filled with process water, in which method, of at least three parameter groups of the vibratory grinding process, parameters are in each case detected and supplied to an evaluation device (30) which, after an analysis of the values of all the detected parameters, outputs a command for operating the vibratory grinding system (10) by means of an output device (34),
**characterized in that**, of the three parameter groups,
a) a first parameter group comprises at least one machine parameter which is selected from the group that at least comprises: rotational speed and temperature of a machine (10) operated in the vibratory grinding system; and
b) a second parameter group comprises at least one process water parameter which is selected from the group that at least comprises: conductivity and degree of turbidity of the process water; and
c) a third parameter group comprises at least one process parameter which is selected from the group that at least comprises: process medium consumption and production quantity.

2. A method according to claim 1,
**characterized in that**
at least one action instruction is output as a command.

3. A method according to claim 1 or 2,
**characterized in that**
at least one control command is output as a command.

4. A method according to any one of the preceding claims,
**characterized in that**
the detection of the parameters takes place by a manual input into an input device (M, P, PW).

5. A method according to any one of the preceding claims 1 to 4, **characterized in that**
the detection of the parameters takes place in an automated manner and in particular takes place continuously.

6. A method according to any one of the preceding claims,
**characterized in that**
the parameters are transmitted to the evaluation device (30) via remote data transmission.

7. A method according to any one of the preceding claims,
**characterized in that**
the command comprises outputting an alarm message.

8. A method according to any one of the preceding claims,
**characterized in that**
a parameter is detected from the second parameter group **in that** an operator performs a visual and/or olfactory assessment and the result of this assessment is supplied to the evaluation device (30) in the form of an assessment which can be preselected from a group.

9. A method according to any one of the preceding claims,
**characterized in that**
a parameter is detected from the second parameter group by an image sensor and/or an odor sensor.

10. A method according to any one of the preceding claims,
**characterized in that**
the command comprises a request to an operator to initiate a maintenance of at least one component of the vibratory grinding system.

11. A method according to any one of the preceding claims,
**characterized in that**
at least one machine parameter of a vibratory grinding device, a centrifuge, a pump, and/or a waste water purification apparatus is detected in the first parameter group.

12. A method according to any one of the preceding claims,
**characterized in that**,
to output the command, the detected parameters of all three parameter groups are correlated in the evaluation device (30).

13. An apparatus for carrying out a method according to at least one of the preceding claims, comprising an evaluation device (30) which is connected to an input device (M, P, PW) and an output device (34) and which is configured and adapted to detect at least two machine parameters, at least two process water parameters, and at least two process parameters of a vibratory grinding process of a vibratory grinding system, to analyze the detected parameters in a correlated manner, and to output a command for operating the vibratory grinding system by means of the output device (34).

14. An apparatus according to claim 13,
**characterized in that**
the input device (34) is connected to a control unit (20) of the vibratory grinding system and reads out at least one of the parameters from the control unit.

15. An apparatus according to claim 13 or 14,
**characterized in that**
the output device (34) is connected to a control unit (20) of the vibratory grinding system and outputs at least one control command for operating the vibratory grinding system to the control unit (20).

## Revendications

1. Procédé de surveillance d'un processus de tribofinition réalisé dans une installation de tribofinition (10) dans un récipient rempli d'eau de traitement, procédé dans lequel des paramètres parmi au moins trois groupes de paramètres du processus de tribofinition sont saisis et amenés à un dispositif d'évaluation (30) qui, après une analyse des valeurs de tous les paramètres saisis, émet un ordre pour un fonctionnement de l'installation de tribofinition (10) au moyen d'un dispositif de sortie (34),
**caractérisé en ce que**
parmi les trois groupes de paramètres
a) un premier groupe de paramètres comprend au moins un paramètre de machine sélectionné dans le groupe comprenant au moins : la vitesse de rotation et la température d'une machine (10) exploitée dans l'installation de tribofinition ; et
b) un deuxième groupe de paramètres comprend au moins un paramètre d'eau de traitement sélectionné dans le groupe comprenant au moins : la conductivité et le degré de turbidité de l'eau de traitement ; et
c) un troisième groupe de paramètres comprend au moins un paramètre de processus sélectionné dans le groupe comprenant au moins : la consommation de produits de traitement et la quantité de production.

2. Procédé selon la revendication 1,
**caractérisé en ce que**
au moins une instruction d'action est émise en tant qu'ordre.

3. Procédé selon la revendication 1 ou 2,
**caractérisé en ce que**
au moins une instruction de commande est émise en tant qu'ordre.

4. Procédé selon l'une des revendications précédentes,
**caractérisé en ce que**
la saisie des paramètres s'effectue par entrée manuelle dans un dispositif d'entrée (M, P, PW).

5. Procédé selon l'une des revendications précédentes 1 à 4,
**caractérisé en ce que**
la saisie des paramètres s'effectue de façon automatisée et en particulier en continu.

6. Procédé selon l'une des revendications précédentes,
**caractérisé en ce que**
les paramètres sont transmis au dispositif d'évaluation (30) par télétransmission de données.

7. Procédé selon l'une des revendications précédentes,
**caractérisé en ce que**
l'ordre inclut l'émission d'un message d'alarme.

8. Procédé selon l'une des revendications précédentes,
**caractérisé en ce que**
un paramètre du deuxième groupe de paramètres est saisi par le fait qu'un opérateur procède à une évaluation visuelle et/ou olfactive et transmet au dispositif d'évaluation (30) le résultat de cette évaluation sous la forme d'une évaluation susceptible d'être présélectionnée dans un groupe.

9. Procédé selon l'une des revendications précédentes,
**caractérisé en ce que**
un paramètre du deuxième groupe de paramètres est saisi par un capteur d'images et/ou par un capteur olfactif.

10. Procédé selon l'une des revendications précédentes,
**caractérisé en ce que**
l'ordre inclut une demande à un opérateur d'effectuer une maintenance d'au moins un composant de l'installation de tribofinition.

11. Procédé selon l'une des revendications précédentes,
**caractérisé en ce que**
au moins un paramètre de machine d'un dispositif de tribofinition, d'une centrifugeuse, d'une pompe et/ou d'un dispositif d'épuration des eaux usées est saisi dans le premier groupe de paramètres.

12. Procédé selon l'une des revendications précédentes,
**caractérisé en ce que**
pour l'émission de l'ordre, les paramètres saisis de tous les trois groupes de paramètres sont corrélés dans le dispositif d'évaluation (30).

13. Dispositif de mise en oeuvre d'un procédé selon l'une au moins des revendications précédentes, comprenant un dispositif d'évaluation (30) qui est en communication avec un dispositif d'entrée (M, P, PW) et avec un dispositif de sortie (34) et qui est conçu et agencé pour saisir au moins deux paramètres de machine, au moins deux paramètres d'eau de traitement et au moins deux paramètres de processus d'un processus de tribofinition d'une installation de tribofinition, pour analyser de manière corrélée les paramètres saisis et pour émettre un ordre pour un fonctionnement de l'installation de tribofinition au moyen du dispositif de sortie (34).

14. Dispositif selon la revendication 13,
**caractérisé en ce que**
le dispositif d'entrée (34) est connecté à une unité de commande (20) de l'installation de tribofinition et lit au moins l'un des paramètres dans l'unité de commande.

15. Dispositif selon la revendication 13 ou 14,
**caractérisé en ce que**
le dispositif de sortie (34) est connecté à une unité de commande (20) de l'installation de tribofinition et émet à l'unité de commande (20) au moins un ordre de commande pour un fonctionnement de l'installation de tribofinition.
